# EUROPÄISCHE PATENTSCHRIFT

(11) **EP 2 303 180 B1**
(45) Veröffentlichungstag und Bekanntmachung des Hinweises auf die Patenterteilung: **23.08.2017**
(21) Anmeldenummer: 09757147.5
(22) Anmeldetag: 08.04.2009
(51) Int. Cl.: A61C 8/00

(54) **VORRICHTUNG ZUM ANBRINGEN EINER ABFORMKAPPE AN EINEM ZAHNIMPLANTAT**
DEVICE FOR ATTACHING A CASTING COVER TO A TOOTH IMPLANT
DISPOSITIF DESTINÉ À L'APPLICATION D'UN CHAPEAU DE MOULAGE SUR UN IMPLANT DENTAIRE

(30) Priorität: 06.06.2008 EP 08010314
(43) Veröffentlichungstag der Anmeldung: 06.04.2011
(73) Patentinhaber: Straumann Holding AG, 4002 Basel (CH)
(72) Erfinder: ZUCKER, Arik, 8003 Zürich (CH); RAEBER, Georg, 4123 Allschwil (CH)
(74) Vertreter: Schaad, Balass, Menzl & Partner AG
(86) Internationale Anmeldenummer: PCT/EP2009/002597
(87) Internationale Veröffentlichungsnummer: WO 2009/146763

(56) Entgegenhaltungen:
- WO-A-89/06941
- WO-A-96/29019
- WO-A-2006/101957
- DE-A1- 4 112 178
- FR-A- 2 853 828
- US-B1- 6 332 777
- US-B1- 6 382 977

## Beschreibung

Die vorliegende Erfindung betrifft eine Vorrichtung zum lösbaren Befestigen einer Abformkappe an einem Zahnimplantat gemäss dem Oberbegriff des Patentanspruches 1.

Eine Vorrichtung dieser Art ist aus der WO 96/29019 A1 bekannt, wobei eine Verbindungsanordnung für einen Implantat gestützten Zahnersatz offenbart wird. Die Verbindungsanordnung umfasst einen Steckanker mit einem elastischen Klemmkopf und eine dazu komplementäre Kontour. Diese Kontur - z.B. eine Rastschulter - ist im Gegenstück einer Steckverbindung angeordnet, also in der Abdruckkappe, der Kronenkappe oder in einem vorhandenen Sekundärteil. Das Sekundärteil kann in das Implantat bzw. in ein Manipulierimplantat eingesetzt oder deren fester Bestandteil sein.

Eine weitere Vorrichtung ist beispielsweise aus der EP 0 986 343 A und der entsprechenden US 6,332,777 B, Figuren 23 bis 27, bekannt. Ein Sekundärteil ist mittels einer Schraubenverbindung an einem Implantat befestigt und weist einen aus dem Implantat herausragenden, sich konisch verjüngenden Kopf mit in Umfangsrichtung verteilten Positionierungsvorsprüngen und -ausnehmungen auf. Weiter ist das Sekundärteil mit einer Ringnut versehen, in welche ein elastisch deformierbares, ringförmiges Haltemittel einer Abformkappe im montierten Zustand eingreift. Die Abformkappe weist weiter in radialem Abstand zum Haltemittel eine formfeste wand auf, mit deren Basisfläche im montierten Zustand die Abformkappe an einer umlaufenden Schulter des Implantats anliegt. Das Haltemittel und die Ringnut bilden eine lösbare Schnappverbindung.

Diese bekannte Vorrichtung ist insbesondere an Stellen von Zähnen mit relativ grossem Querschnitt geeignet. Sie ist jedoch am Stellen von Zähnen mit kleinerem Querschnitt, wie beispielsweise im vorderen Bereich des Unterkiefers, weniger geeignet, wo vielmals Implantate kleinen Querschnitts eingesetzt werden müssen und wenig Platz zur Verfügung steht.

Die US 6,382,977 B offenbart ein Abformelement, welches mit einem zapfenartigen Vorsprung in die Ausnehmung eines Implantats einsetzbar ist. Der Vorsprung weist Federfinger für die lösbare kraftschlüssige Befestigung am Implantat auf. Diese Vorrichtung dürfte bei im Querschnitt kleinen Implantaten eine zu wenig zuverlässige Stabilität bei der Abformung ergeben.

Es ist deshalb eine Aufgabe der vorliegenden Erfindung, eine gattungsgemässe Vorrichtung zu schaffen, welche selbst bei wenig Platzbedarf ein stabiles Halten der Abformkappe am Zahnimplantat gewährleistet.

Diese Aufgabe wird mit einer Vorrichtung gemäss Patentanspruch 1 gelöst.

Erfindungsgemäss sind die elastisch deformierbaren Haltemittel zum lösbaren Befestigen der Abformkappe am Zahnimplantat am Sekundärteil angeformt und nicht, wie bei vorbekannten Vorrichtungen, an der Abformkappe. Dadurch kann die Abformkappe auch im Bereich, in welchem sie mit dem Sekundärteil zusammenwirkt, mit einer formfesten Wand ausgestattet werden. Dies ermöglicht eine äusserst stabile Ausbildung der Abformkappe, auch bei äusserst kleinen Durchmessern. Die kraftschlüssige Befestigung der Abformkappe am Zahnimplantat gewährleistet das zerstörungsfreie Lösen dieser Befestigung durch Überwinden einer vorbestimmten Kraft. Zur Befestigung eignen sich insbesondere ein Reibschluss und, in bevorzugter Weise, eine durch Zugkraft lösbare Schnappverbindung.

Die erfindungsgemässe Vorrichtung erlaubt eine stabile Ausbildung der Abformkappe ohne deformierbare Bereiche. Sie kann in einfacher Art und Weise in axialer Richtung über das am Zahnimplantat befestigte Sekundärteil gestülpt beziehungsweise mit diesem axial gefügt werden, womit deformierbare Abschnitte an der Aussenfläche vermieden sind. Selbst bei kleinen Durchmessern ist eine stabile Befestigung der Abformkappe am Zahnimplantat ermöglicht. Weiter eignet sich die Vorrichtung für die Verwendung von geschlossenen Abformlöffeln (closed tray).

Durch eine Schraubenverbindung ist eine ausserst stabile Befestigung des Sekundärteils am Zahnimplantat gewährleistet. Überdies ist die Möglichkeit gegeben, einen Teil der Schraubverbindung, in bevorzugter Weise einen Schraubenschaft mit Aussengewinde, am Sekundärteil anzuformen. Es ist jedoch auch möglich, das Sekundärteil mit einem Durchgangsloch zu versehen, durch welches hindurch eine Schraube in das Zahnimplantat mit Innengewinde eingedreht werden kann. Dies ermöglicht eine genau definierte Drehposition des Sekundärteils bezüglich des Zahnimplantats. Durch wenigstens einen Federfinger können die elastisch deformierbaren Haltemittel auf einfache Art und Weise ausgebildet werden.

Eine besonders stabile Befestigung der Abformkappe im Zahnimplantat ist mit einer besonders bevorzugten Ausführungsform der Vorrichtung gemäss Anspruch 2 erzielbar.

Eine einfache, durch Zugkraft lösbare, kraftschlüssige Schnappverbindung ist im Patentanspruch 3 angegeben.

Die besonders bevorzugte Ausführungsform der erfindungsgemässen Vorrichtung gemäss Anspruch 4 erlaubt die Erzielung symmetrischer Befestigungskräfte.

Ein besonders genauer Abgriff der Achse des Zahnimplantats beziehungsweise des Sekundärteils wird mit der bevorzugten Ausführungsform gemäss Anspruch 5 erzielt.

Eine definierte Drehposition der Abformkappe bezüglich des Zahnimplantats ist in einfacher Art und Weise mit einer bevorzugten Ausführungsform der erfindungsgemässen Vorrichtung gemäss Anspruch 6 erzielbar, indem das Sekundärteil bezüglich des Zahnimplantat und die Abformkappe bezüglich des Sekundärteils definierte Drehpositionen einnehmen.

Eine besonders einfache Möglichkeit zur Sicherstellung einer definierten Drehlage zwischen Sekundärteil und Zahnimplantat ist im Patentanspruch 7 und 8 angegeben. Besonders bevorzugte Ausführungsformen der erfindungsgemässen Vorrichtung zum Sicherstellen einer definierten Drehlage der Abformkappe bezüglich des Sekundärteils sind in den Ansprüchen 9 bis 11 definiert. definierten Drehlage der Abformkappe bezüglich des Eine besonders genaue Übernahme der Implantathöhe durch die Abformkappe ist bei den besonders bevorzugten Ausführungsformen der erfindungsgemässen Vorrichtung gemäss den Ansprüchen 12 und 13 gewährleistet. Ausführungsformen der erfindungemässen Vorrichtung gemäss In bevorzugter weise werden bei der Abformung die drei Koordinaten Winkel des Zahnimplantats (der Zahnimplantatachse), Höhe des Implantats gegenüber des Kieferknochens beziehungsweise der Nachbarzähne und Rotation/Drehlage des Implantats mittels der erfindungsgemässen Vorrichtung auf ein Labormodell, welches meistens aus Gips gefertigt wird, übertragen. Dazu ist die erfindungsgemässe Abformkappe aus einem härteren Material, beispielsweise aus einem Metall oder einer Metalllegierung, insbesondere aus Titan oder einer Titanlegierung, gefertigt als das Sekundärteil, welches beispielsweise aus einem Polymer hergestellt ist.

In bevorzugter Weise wird die Abformkappe durch die durch die elastisch deformierbaren Haltemittel ausgeübten Kräfte in axialer Richtung gegen das Zahnimplantat gedrückt, sodass die Abformkappe auf einer definierten Fläche, beispielsweise einer Schulter des Zahnimplantats oder auf einer Auflagefläche des Sekundärteils, sicher aufliegt. Auf diese Art und Weise kann die Höhe des Zahnimplantats besonders zuverlässig auf das Labormodell übertragen werden.

Eine besonders zuverlässige Übertragung der Implantatachse ist durch die Ausbildung eines Führungsteils am Sekundärteil für die Abformkappe, beispielsweise einer Mantelfläche, an welcher im montierten Zustand die formfeste Wand der Abformkappe anliegt, gewährleistet.

Die definierte Drehlage des Sekundärteils bezüglich des Implantats wird vorzugsweise mittels einer vieleckigen Verbindungsgeometrie sichergestellt, bei welcher die betreffenden Geometrien des Sekundärteils und des Implantats übereinstimmen, und die definierte Drehlage der Abformkappe bezüglich des Sekundärteils ist in bevorzugter Weise durch eine Anzahl von mit Schnappnasen ausgebildeten Federfingern gewährleistet, welche mit betreffenden Ausnehmungen der Abformkappe in Eingriff gelangen.

In bevorzugter Weise weist das Sekundärteil, falls die Verbindungsgeometrie regelmässig ausgebildet ist und eine gerade Anzahl Ecken aufweist, halb so viele Federfinger mit Schnappnasen auf, wie die Verbindungsgeometrie Ecken hat, bei einer beispielsweise Achtkant-Verbindungsgeometrie vorzugsweise vier Federfinger mit je einer Schnappnase. Die Anzahl Federfinger kann jedoch auch mit der Anzahl Ecken der Verbindungsgeometrie übereinstimmen oder es können doppelt so viele Federfinger wie Ecken der Verbindungsgeometrie vorgesehen werden. Generell gesprochen sollte die Anzahl der Federfinger ein Vielfaches oder ein Bruchteil der Anzahl Drehlagen, welche die Verbindungsgeometrie ermöglicht, sein.

Die erfindungsgemässe Vorrichtung wird anhand in der Zeichnung dargestellten Ausführungsformen näher erläutert.

Es zeigen rein schematisch:
- Fig. 1: in Ansicht einen oberen Teil eines Zahnimplantats;
- Fig. 2: in einem Längsschnitt das Zahnimplantat gemäss Fig. 1;
- Fig. 3: in Draufsicht das Zahnimplantat gemäss Fig. 1;
- Fig. 4: in Ansicht eine erste Ausführungsform eines Sekundärteils mit einer Implantatschraube;
- Fig. 5: in Seitenansicht das Sekundärteil gemäss Fig. 4 mit der Implantatschraube;
- Fig. 6: in Draufsicht das Sekundärteil und die Implantatschraube gemäss Fig. 4;
- Fig. 7: in Ansicht das Sekundärteil gemäss den Fig. 4 bis 6, welches in das im Längsschnitt gezeigte Zahnimplantat gemäss den Fig. 1 bis 3 eingesetzt und daran mittels der Implantatschraube befestigt ist;
- Fig. 8: in gleicher Darstellung wie Fig. 7 das am Zahnimplantat montierte Sekundärteil und eine ebenfalls in Längsschnitt dargestellte aufgesetzte Abformkappe;
- Fig. 9: einen Schnitt entlang der Linie IX - IX durch die Vorrichtung der Fig. 8;
- Fig. 10: in Ansicht eine zweite Ausführungsform eines Sekundärteils mit einer ringförmigen Auflagefläche für eine Abformkappe;
- Fig. 11: in gleicher Darstellung wie Fig. 8 das am Zahnimplantat montierte Sekundärteil gemäss Fig. 10 mit einer aufgesetzten zweiten Ausführungsform einer Abformkappe, welche an der Auflagefläche anliegt;
- Fig. 12: im Längsschnitt die Abformkappe der Vorrichtung gemäss Fig. 8;
- Fig. 13: einen Schnitt durch die Abformkappe entlang der Linie XIII - XIII der Fig. 12;
- Fig. 14: einen Schnitt durch die Abformkappe entlang der Linie XIV - XIV der Fig. 12;
- Fig. 15: einen Längsschnitt durch die Abformkappe entlang der Linie XV - XV der Fig. 12;
- Fig. 16: im Längsschnitt eine dritte Ausführungsform einer Abformkappe;
- Fig. 17: die Abformkappe im Schnitt entlang der Linie XVII - XVII der Fig. 16;
- Fig. 18: einen Schnitt durch die Abformkappe entlang der Linie XVIII - XVIII der Fig. 16;
- Fig. 19: einen Längsschnitt durch die Abformkappe entlang der Linie XIX - XIX der Fig. 16;
- Fig. 20: in ähnlicher Darstellung wie Fig. 8 und 11 eine erfindungsgemässe Vorrichtung mit einer weiteren Ausführungsform eines Sekundärteils und einer dazu passenden Abformkappe;
- Fig. 21: einen Schnitt durch die Vorrichtung entlang der Linie XXI - XXI der Fig. 20;
- Fig. 22: einen Schnitt durch die Vorrichtung entlang der Linie XXII - XXII der Fig. 20;
- Fig. 23: einen Schnitt durch die Vorrichtung entlang der Linie XXIII - XXIII der Fig. 20;
- Fig. 24: in gleicher Darstellung wie Fig. 20 eine weitere Ausführungsform der erfindungsgemässen Vorrichtung;
- Fig. 25: einen Schnitt durch die Vorrichtung entlang der Linie XXV - XXV der Fig. 24;
- Fig. 26: einen Schnitt durch die Vorrichtung entlang der Linie XXVI - XXVI der Fig. 24;
- Fig. 27: einen Schnitt durch die Vorrichtung entlang der Linie XXVII - XXVII der Fig. 24;
- Fig. 28: einen Schnitt durch die Vorrichtung entlang der Linie XXVIII - XXVIII der Fig. 24;
- Fig. 29: einen Teil der Vorrichtung der Fig. 24 in einem Längsschnitt entlang der Linie XXIX - XXIX der Fig. 24;
- Fig. 30: in Ansicht eine weitere Ausführungsform des Sekundärteils; und
- Fig. 31: in Draufsicht das Sekundärteil gemäss Fig. 30.

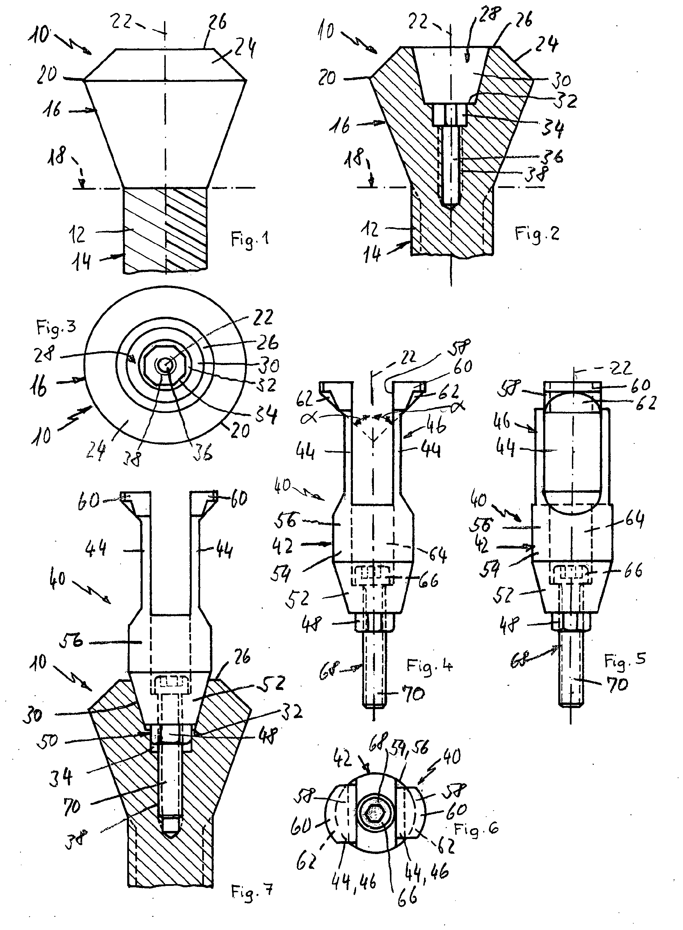

Die Figuren 1 bis 3 zeigen schematisch ein Zahnimplantat 10, welches einen mit einem aussenliegenden Implantatgewinde 12 versehenen Verankerungsabschnitt 14 und einen daran anschliessenden Kopfabschnitt 16 aufweist. Das im Wesentlichen rotationssymmetrisch aufgebaute Zahnimplantat 10 ist dazu bestimmt, mit seinem Verankerungsabschnitt 14 in bekannter Art und Weise in einen Kieferknochen 18 eingesetzt zu werden, derart, dass es mit seinem Kopfabschnitt 16 über den Kieferknochen vorsteht und die Schleimhaut wenigstens annähernd durchdringt. Vom Verankerungsabschnitt 14 her, erweitert sich der Kopfabschnitt 16 konisch bis zu einer umlaufenden Implantataussenkante 20. Der in Richtung der Längsachse 22 des Zahnimplantats 10 gemessene Abstand zwischen dem Verankerungsabschnitt 14 und der Implantataussenkante 22 entspricht vorzugsweise wenigstens annähernd der Dicke der Schleimhaut. Anschliessend an die Implantataussenkante 20 verjüngt sich der Kopfabschnitt 16 zu seinem freien Ende hin konisch und bildet eine umlaufende Schulter 24 in der Form des Mantels eines Kegelstumpfs. Auf der dem Verankerungsabschnitt 14 abgewandten Stirnseite weist der Kopfabschnitt 16, anschliessend an die Schulter 24, eine ringförmige ebene Stirnfläche 26 auf, welche in einer rechtwinklig zur Längsachse 22 verlaufenden Ebene angeordnet ist und von welcher radial innen eine Implantatausnehmung 28 ausgeht. Diese weist angrenzend an die Stirnfläche 26 einen sich konisch verjüngenden Abschnitt 30 auf. Vom Boden 32 dieses konischen Abschnitts 30 geht ein im Querschnitt achteckiger Abschnitt 34 der Implantatausnehmung 28 aus, welchem ein Gewindeabschnitt 36 mit einem Innengewinde 38 folgt. Einstückig ausgebildete Zahnimplantate 10 dieser Art sind allgemein bekannt. Üblicherweise werden sie aus einem Metall beziehungsweise einer Metalllegierung, insbesondere aus Titan oder einer Titanlegierung, hergestellt.

Eine erste Ausführungsform eines zum Befestigen am Zahnimplantat 10 mittels einer Schraubverbindung 39 geeignetes Sekundärteil 40 gemäss der vorliegenden Erfindung ist in den Figuren 4 bis 6 gezeigt. Es weist einen zur Längsachse 22 symmetrisch ausgebildeten Sockelbereich 42 und zwei von diesem abstehende Federfinger 44 auf. Die Federfinger 44 verlaufen parallel zur Längsachse 22, sind bezüglich dieser diametral gegenüberliegend angeordnet und bilden elastisch deformierbare Haltemittel 46.

Das einstückig und vorzugsweise aus einem Polymer hergestellte Sekundärteil 40 weist in seinem in den Figuren 4 und 5 unteren Endbereich einen im Querschnitt achteckigen Zapfenabschnitt 48 auf, welcher gegengleich dem achteckigen Abschnitt 34 des Zahnimplantats 10 geformt und dazu bestimmt ist, in montiertem Zustand darin einzugreifen, wie dies in der Figur 7 gezeigt ist. Der achteckige Abschnitt 34 des Zahnimplantats und der entsprechend geformte, in axialer Richtung etwas kürzer ausgebildete Zapfenabschnitt 48 legen die gegenseitige Drehlage fest und bilden erste Positioniermittel 50.

Anschliessend an den Zapfenabschnitt 48 weist der Sockelbereich 42 einen sich konisch erweiternden Sockelabschnitt 52 auf. Dieser konische Sockelabschnitt 52 ist gegengleich dem konischen Abschnitt 30 des Zahnimplantats 10 geformt und dazu bestimmt, im montierten Zustand an diesem konischen Abschnitt 30 anzuliegen; siehe Figur 7. Im montierten Zustand steht der Sockelabschnitt vorzugsweise über die Stirnfläche 26 vor und reicht er nicht bis zum Boden 32.

Dem konischen Sockelabschnitt 52 folgt auf der dem Zapfenabschnitt 48 abgewandten Seite ein Führungsabschnitt 54 mit einer aussenliegenden, zur Längsachse 22 konzentrisch angeordneten kreiszylinderförmigen Mantelfläche 56. Der Übergang vom konischen Sockelabschnitt 52 zum Führungsabschnitt 54 kann - im am Zahnimplantat 10 montierten Zustand - bei der Stirnfläche 26 erfolgen, vorzugsweise ist dieser Übergang jedoch - im montierten Zustand - in einem Abstand zum Zahnimplantat 10 angeordnet, wie dies insbesondere aus der Figur 7 hervorgeht. Im montierten Zustand ist die Mantelfläche 56 gegenüber dem Zahnimplantat 10 freiliegend.

An den Führungsabschnitt 54 schliessen die beiden Federfinger 44 an, welche vom Sockelbereich 42 in dem Zapfenabschnitt 48 abgewandter Richtung abstehen. Die beiden Federfinger 44 weisen in ihrem freien Endbereich 58 je eine in radialer Richtung gegen aussen vorstehende Schnappnase 60 auf. Die Schnappnasen 60 sind mit einer Stützfläche 62 ausgestattet, welche zur Längsachse 22 in einem spitzen Winkel α verläuft und im vorliegenden Fall als Teil einer Konusfläche ausgebildet ist.

Durch den Sockelbereich 42 hindurch verläuft in Richtung der Längsachse 22 ein Schraubendurchlass 64. Dieser ist abgestuft ausgebildet, sodass sich der Schraubenkopf 66 einer darin von der Seite der Federfinger 44 her eingesetzten Implantatschraube 68 abstützen kann. Die eingesetzte Implantatschraube 68 steht mit ihrem Gewindeschaft 70 über das Sekundärteil 40 vor und ist dazu bestimmt, mit dem Innengewinde 38 des Zahnimplantats 10, die Schraubverbindung 39 bildend, zusammen zu wirken und im montierten Zustand das Sekundärteil 40 am Zahnimplantat 10 festzuhalten; Figur 7.

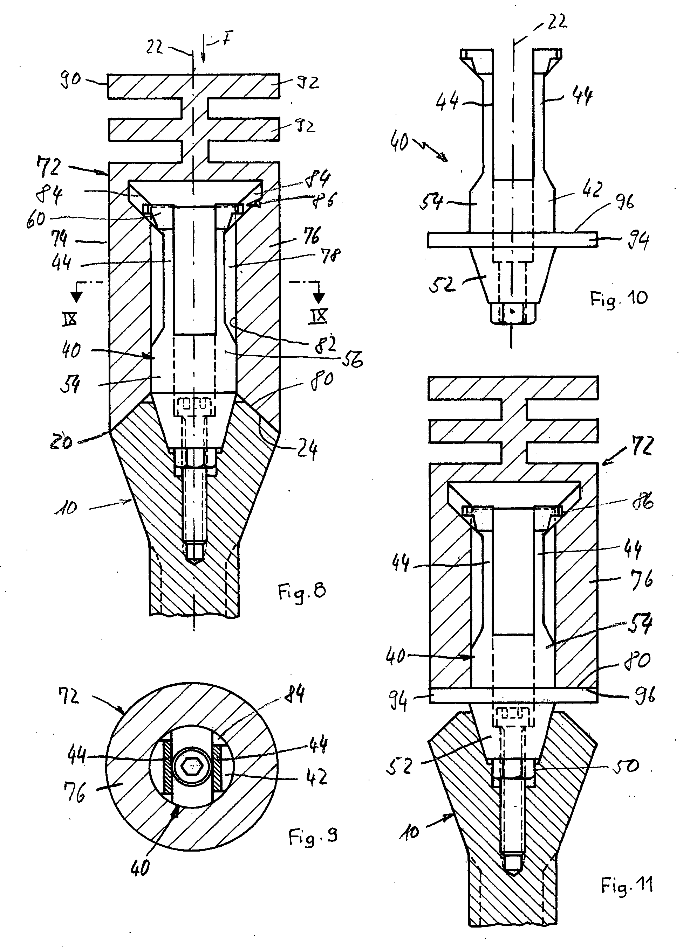

Figur 8 zeigt die erfindungsgemässe Vorrichtung mit einer auf das mit dem Sekundärteil 40 versehene Zahnimplantat 10 in Fügerichtung F aufgesetzten Abformkappe 72. Die Fügerichtung F verläuft in Richtung der Längsachse 22. Die gesamte Abformkappe 72 ist formstabil ausgebildet und vorzugsweise aus einem Polymer, einem Metall oder einer Metalllegierung gefertigt. Sie weist einen kreiszylinderförmigen Körperabschnitt 74 auf, dessen Aussendurchmesser mit dem Durchmesser der kreisförmigen Implantataussenkante 20 übereinstimmt. Mit seiner formfesten Wand 76 begrenzt der Körperabschnitt 74 umfangsseitig einen sacklochartigen Aufnahmeraum 78 für den Führungsabschnitt 54 und die Federfinger 44 des Sekundärteils 40. Die Stirnseite der Wand 46 ist mit einer Basisfläche 80 versehen, welche gegengleich zur Schulter 24 des Zahnimplantats 10 geformt ist. Im montierten Zustand liegt die Abformkappe 72 mit der Basisfläche 80 an der Schulter 24 des Zahnimplantats 10 an. Weiter ist die radial innen liegende Oberfläche 82 entsprechend der Mantelfläche 56 kreiszylinderförmig ausgebildet, um im montierten Zustand zentrierend an dieser anzuliegen.

Der ansonsten kreiszylinderförmige Aufnahmeraum 78 ist in seinem der Basisfläche 80 abgewandten Endbereich durch zwei einander diametral gegenüberliegende Ausnehmungen 84 erweitert. Diese sind in Umfangsrichtung begrenzt und weisen in Umfangsrichtung eine Ausdehnung aus, welche in gleicher Richtung gemessen, der Ausdehnung der Schnappnasen 60 entspricht, beziehungsweise nur geringfügig grösser ist, sodass beim Aufsetzen der Abformkappe 72 auf das mit dem Sekundärteil 40 versehene Zahnimplantat 10, die Schnappnasen 60, in Folge der Federwirkung der Federfinger 44, in Eingriff mit den Ausnehmungen 84 gelangen können. Die Ausnehmungen 84 bilden zusammen mit den Schnappnasen 60 zweite Positioniermittel 86 zum Festlegen der Drehlage zwischen dem Sekundärteil 40 und der Abformkappe 72. Weiter bilden die Ausnehmungen 84 Hinterschnitte 88, wobei diese im gezeigten Beispiel eine entsprechend der Stützfläche 62 der Schnappnasen 60 geformte Stützfläche 62' bilden. Die konischen, einen spitzen Winkel α zur Längsachse 82 einschliessenden Stützflächen 62, 62' bewirken, infolge der Federkraft der Federfinger 44, eine Kraftkomponente in Richtung der Längsachse 82, mit welcher die Abformkappe 72 in Richtung gegen das Zahnimplantat 10 gedrückt wird, sodass sie mit ihrer Basisfläche 80 satt an der Schulter 24 des Zahnimplantats anliegt. Dies bewirkt bei der Abformung eine sehr genaue Abnahme der Höhenlage des Zahnimplantats. Weiter ermöglichen die Stützflächen 62, 62' ein automatisches Lösen der Schnappverbindung 81 und somit der Befestigung der Abformkappe 72 am Zahnimplantat 10, wenn eine vorbestimmte Kraft entgegen der Fügerichtung F überschritten wird.

Auf der der Basisfläche 80 abgewandten Seite schliesst an den Körperabschnitt 74 eine Verankerungszone an, in welcher durch einander gegenüberliegende Schlitze 92 Verankerungsflügel 92 ausgebildet sind. Die Verankerungszone 90 dient der festen Verankerung der Abformkappe 72 in einer allgemein bekannten aushärtenden Abformmasse, welche, wie allgemein bekannt, mittels eines Löffels über die am Zahnimplantat 10 montierte Abformkappe 72 und allenfalls benachbarte Zähne oder Abformkappen gedrückt wird, um einen Abdruck der Gebisssituation zu nehmen.

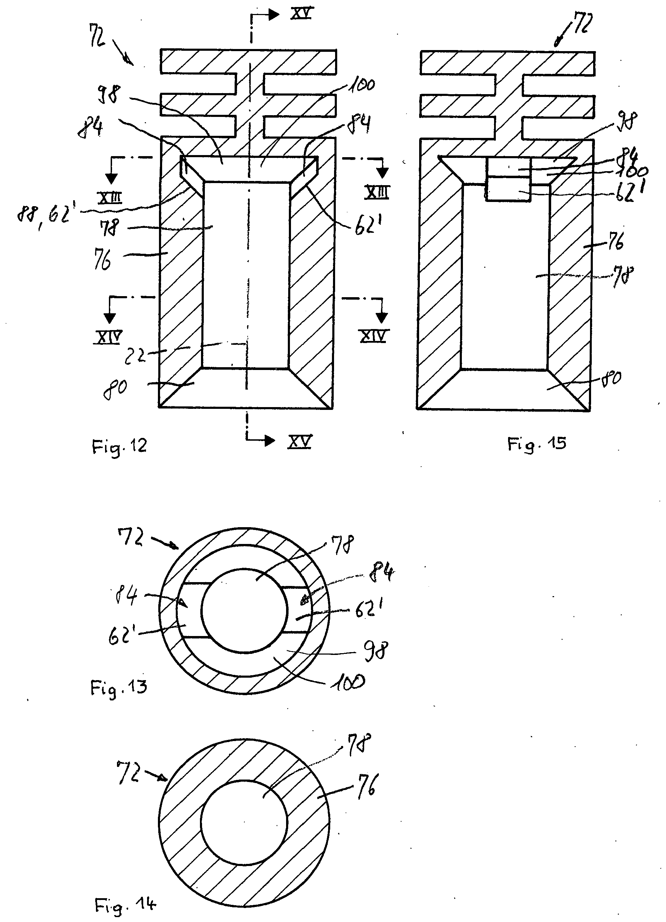

Der Querschnitt der formfesten Wand 76 und deren Zusammenwirken mit dem Führungsabschnitt 54 des Sekundärteils 40 ist insbesondere auch der Figur 9 entnehmbar, aus welcher auch deutlich hervorgeht, dass die beiden Federfinger 44 unterschiedliche Breiten aufweisen. Der Zweck dieser Ausführung wird weiter unten im Zusammenhang mit den Figuren 12 bis 15 näher zu beschreiben sein. Der Führungsabschnitt gewährleistet eine sehr genaue Übernahme der Längsachse des Zahnimplantats 10 bei der Abformung.

Die Figur 10 zeigt eine zweite Ausführungsform des Sekundärteils 40 einer erfindungsgemässen Vorrichtung. Der einzige Unterschied dieser Ausführungsform zur weiter oben beschriebenen und in den Figuren 4 bis 6 gezeigten Ausführungsform besteht darin, dass der Sockelbereich 42 zwischen dem konischen Sockelabschnitt 52 und dem kreiszylinderförmigen Führungsabschnitt 54 einen in radialer Richtung vorstehenden, umlaufenden, ringscheibenartigen Vorsprung 94 aufweist. Dieser Vorsprung bildet mit seiner, den Federfingern 44 zugewandten Seite eine umlaufende Auflagefläche 96, welche in einer rechtwinklig zur Längsachse 22 verlaufenden Ebene liegt.

Figur 11 zeigt eine erfindungsgemässe Vorrichtung mit dem in das Zahnimplantat 10 eingesetzten Sekundärteil 40 gemäss Figur 10. Auf das Sekundärteil 40 ist eine Abformkappe 72 aufgeschnappt, welche gleich ausgebildet ist, wie die in den Figuren 8 und 9 gezeigte Abformkappe 72 mit der Ausnahme, dass die Basisfläche 80 entsprechend der Auflagefläche 96 des Sekundärteils 40 als ebene Ringfläche ausgebildet ist. Im montierten Zustand ist die Abformkappe 72 mit ihrer Basisfläche 80 an der Auflagefläche 96 in Anlage und wird, wie weiter oben beschrieben, mittels der Federfinger 44 in Anlage gehalten. Auch hier ist eine besonders gute Zentrierung der Abformkappe 72 durch Anliegen der formfesten Wand 76 am Führungsabschnitt 54 gewährleistet. Bei dieser Ausführungsform wird die Höhenlage des Zahnimplantats 10 indirekt via das Sekundärteil 40 und dessen Verbindung mit dem Zahnimplantat 10 auf dem Abdruck, beziehungsweise das Labormodell übertragen. Die Übertragung der Drehposition folgt genau gleich wie weiter oben beschrieben, nämlich über die ersten und zweiten Positioniermittel 50, 86. Auch die Lage der Längsachse 22 des Implantats 10 wird wie weiter oben beschrieben, übertragen.

Die Figuren 12 bis 15 zeigen die bereits in Figur 8 dargestellte Ausführungsform der Abformkappe 72 für sich. In den Figuren 12, 14 und 15 ist die relativ dicke, formfeste. Wand 76 mit kreisringförmigem Querschnitt besonders gut erkennbar. Diese Wand 76 begrenzt umfangsseitig den sacklochartig ausgebildeten Aufnahmeraum 78. Dieser Aufnahmeraum 78 ist in seinem der Basisfläche 80 abgewandten, geschlossenen Endbereich 98 konusartig erweitert, wobei die Wand 76 eine konusförmige Gleitfläche 100 bildet. Bezüglich dieser Gleitfläche 100 in axialer und radialer Richtung vertieft sind die beiden Ausnehmungen 84 mit den Stützflächen 62' an der Wand 76 ausgebildet. Wie dies der Figur 13 besonders gut entnehmbar ist, ist die rechts gezeigte Ausnehmung 84 in Umfangsrichtung schmaler ausgebildet als die links gezeigte Ausnehmung 84. Da der in den Figuren 4, 6 und 9 rechts gezeigte Federfinger 44 entsprechend schmaler ausgebildet ist als der links gezeigte Federfinger 44 ist eine eindeutige Zuordnung der Drehlage der Abformkappe 72 bezüglich des Sekundärteils 40 gegeben. Der in den genannten Figuren links gezeigte Federfinger 44 kann mit seiner Schnappnase 60 nur in die in den Figuren 12 und 13 links gezeigte Ausnehmung 84 in Eingriff gelangen.

Bei dem Anbringen der Abformkappe 72 am mit dem Sekundärteil 40 ausgerüsteten Zahnimplantat 10 wird die ungefähr auf die Drehlage des Sekundärteils 40 ausgerichtete Abformkappe 72 in Fügerichtung F (vergleiche Figur 8) über das Sekundärteil 40 gestülpt, wobei in Folge der konischen Basisfläche 80 die Federfinger 44 automatisch radial gegen innen ausgebogen werden. Dann wird die Abformkappe 72 niedergedrückt bis sie mit ihrer Basisfläche 80 an der Schulter 24 des Implantats anliegt und gegebenenfalls leicht hin und her gedreht bis die Federfinger 44 mit ihren Schnappnasen 60 in die Ausnehmungen 84 einschnappen und somit mit den Hinterschnitten 88 in Wirkverbindung gelangen. Ein Hin- und Herdrehen ist dann nicht notwendig, wenn die Drehlage der Abformkappe 72 korrekt ist und die Federfinger 44 direkt in die Ausnehmungen eingreifen können, andernfalls ermöglicht die Gleitfläche 100 ein reibungsarmes Hin- und Herdrehen ohne dass Gefahr besteht, dass die Federfinger 44 verbogen werden.

Bei einer Ausführungsform der Abformkappe mit einer ebenen Basisfläche 80, wie sie in der Figur 11 gezeigt ist, können die freien Enden der Federfinger 44 konisch oder keilförmig geformt sein, um beim Aufsetzen der Abformkappe 72 ein automatisches Biegen der Federfinger 44 in radialer Richtung gegen innen zu erwirken. Eine Lagecodierung aussen an der Abformkappe 72, beispielsweise mittels einer Kerbe oder einer Farbmarkierung, kann das Aufsetzen der Abformkappe 72 in etwa korrekter Drehlage vereinfachen.

Wird die Abformkappe 72 mit einer um 180° verkehrten Drehlage auf das Zahnimplantat 10 beziehungsweise das Sekundärteil 40 aufgesetzt, schnappt der schmalere Federfinger 44 in die breitere Ausnehmung 84 ein, während der andere breitere Federfinger 44 nicht in die schmalere Ausnehmung 84 eingreifen kann. In diesem Fall lässt sich die montierte Abformkappe 72 weiterhin begrenzt Hin- und Herdrehen, was bei korrekt montierter Abformkappe 72 nicht mehr der Fall ist. Sie wird wieder abgezogen und nochmals, in etwa korrekter Drehlage, aufgesetzt.

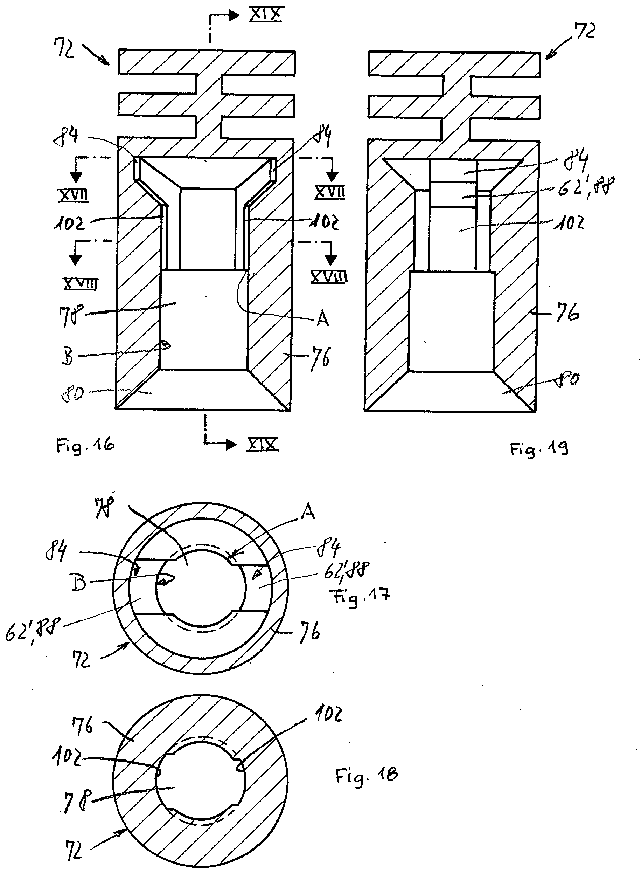

Eine Abformkappe 72, welche ausschliesslich in der korrekten Drehlage auf das mit dem Sekundärteil 40 versehene Zahnimplantat 10 aufsetzbar ist, ist in den Figuren 16 bis 19 gezeigt. Der Aufnahmeraum 78 weist, anschliessend an die Basisfläche 80, über eine etwa zur Hälfte in Richtung der Längsachse 22 gemessene Tiefe einen kreiszylinderförmigen Querschnitt auf. Dies ist in den Figuren 16 und 17 mit B gekennzeichnet. Anschliessend an diesen Bereich ist die lichte Weite des Aufnahmeraums 78 durch eine stufenartige Verdickung der Wand 76 verkleinert. In den Figuren 16 und 17 ist dies mit A gekennzeichnet. Die verdickte Wand 76 weist jedoch in Richtung der Längsachse 22 verlaufende Nuten 102 entsprechend den unterschiedlichen Breiten der Federfinger 44 auf. Der Boden dieser Nuten 102 hat einen Abstand zur zentralen Längsachse 22, welcher der lichten Weite der Ausnehmung 84 im zylinderförmigen Bereich B entspricht. Diese Nuten 102 führen in die entsprechenden Ausnehmungen 84.

Die Abformkappe 72 kann bei dieser Ausführungsform in beliebiger Drehlage in Fügerichtung F über die Federfinger 44 des Sekundärteils 40 gestülpt werden bis diese an der Schulter A anstehen. Durch Drehen der Abformkappe 72 unter leichtem Druck in Fügerichtung F, kann die korrekte Drehlage aufgefunden werden, in welche beide Federfinger 44 in ihre zugeordneten Nuten 102 hineingleiten können. Ein automatisches Einschnappen der Schnappnasen 60' in die betreffenden Ausnehmungen 84 erfolgt sobald die Abformkappe 72 mindestens annähernd vollständig an der Schulter 24 des Zahnimplantats 10, beziehungsweise an der Auflagefläche 96 bei einer Ausführungsform des Sekundärteils 40 gemäss Figur 10, anliegt. Bei der in den Figuren 16 bis 19 gezeigten Ausführungsform der Abformkappe dienen nicht nur die Schnappnasen 60 der Verdrehsicherung, sondern sind auch die Federfinger 44 über etwa die Hälfte ihrer Länge in den zugeordneten Nuten 102 aufgenommen, was die Stabilität der Befestigung der Abformkappe 72 gegenüber der weiter oben gezeigten Ausführungsform nochmals verbessert.

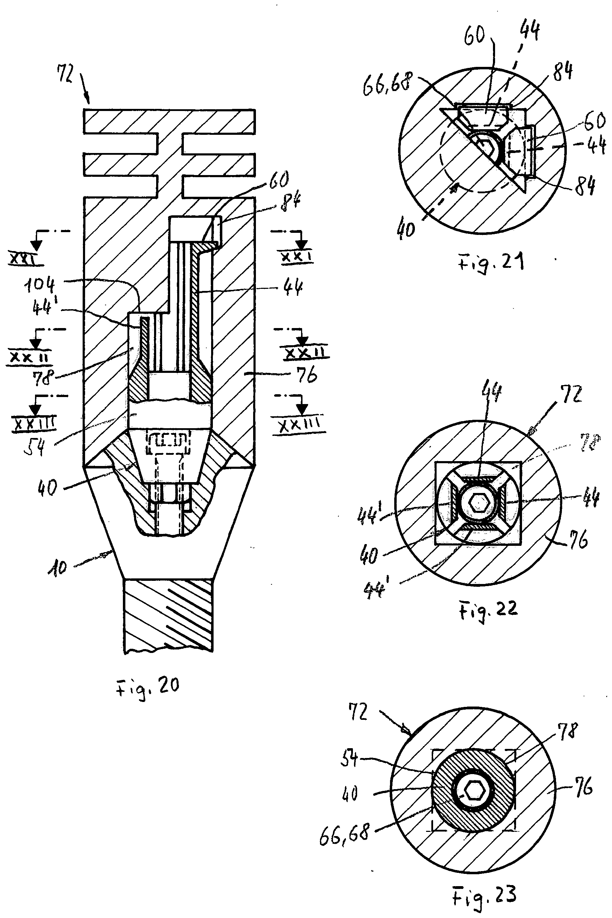

Eine weitere Ausführungsform des Sekundärteils 40 und der Abformkappe 72, welche nur eine eindeutige relative Drehlage zulässt, ist in den Figuren 20 bis 23 gezeigt. Das ansonsten gleich wie weiter oben beschrieben ausgebildete Sekundärteil 40 weist in Umfangsrichtung verteilt vier Finger auf, wobei zwei benachbarte Finger als Federfinger 44 mit Schnappnasen 60 ausgebildet und die andern beiden Finger 44', in Richtung der Längsachse 22 gemessen, nur etwa die halbe Länge aufweisen und ohne Schnappnasen ausgeführt sind.

Die entsprechende, in den Figuren 20 bis 23 ebenfalls dargestellte Abformkappe 72 weist einen Aufnahmeraum 78 mit einem kreisrunden Querschnitt in jenem Bereich, in welchem sie mit dem Führungsabschnitt 54 des Sekundärteils 40 zusammenwirkt, auf, wie dies insbesondere der Figur 23 entnehmbar ist. Dieser Bereich mit kreisrundem Querschnitt erstreckt sich ungefähr über einen Viertel bis ein Drittel der axialen Länge des Aufnahmeraums 78. Anschliessend geht der Querschnitt des Aufnahmeraums 78 in eine quadratische Form über, wie dies Figur 22 zeigt. Ab etwa der Längsmitte des Aufnahmeraums 78 entspricht dessen Querschnitt einem gleichschenkligen, rechtwinkligen Dreieck, wobei die beiden Schenkel in den gleichen Ebenen liegen, wie die zugeordneten Seiten des quadratischen Querschnitts, siehe insbesondere Figur 21. Der Übergang des Querschnitts des Aufnahmeraums 78 von der quadratischen Form zur dreieckigen Form bildet eine Anschlagfläche 104, welche das vollständige Absenken der Abformkappe 72 zur Schulter 24 des Zahnimplantats 10, beziehungsweise auf die Auflagefläche 96 bei einer Ausführung des Sekundärteils 40 gemäss Figur 10, nur bei korrekter Drehlage der Abformkappe 72 bezüglich des Sekundärteils 40 zulässt, andernfalls stehen die Federfinger 44 oder einer der Federfinger 44 mit Schnappnase 60 an der Anschlagfläche 104 an. Selbstverständlich ist die Länge der Federfinger 44 ohne Schnappnase 60 und die Lage der Anschlagfläche 104 derart aufeinander abgestimmt, dass in korrekter Drehlage der Abformkappe 72 eine vollständige Montage ermöglicht und zwischen den Fingern 44' und der Anschlagfläche 104 noch ein Spalt vorhanden ist.

Selbstverständlich ist es bei der in den Figuren 20 bis 22 gezeigten Ausführungsform der Abformkappe 72 auch möglich, dem Aufnahmeraum 78 von der Basisfläche 80 bis zur Anschlagfläche 104 einen quadratischen Querschnitt zu geben, wie diese in Figur 23 mit gestrichelten Linien angedeutet ist. Im montierten Zustand liegt hier, wie auch bei den weiteren Ausführungsformen, die Abformkappe 72 mit ihrer Wand 76 am Führungsabschnitt 54 an.

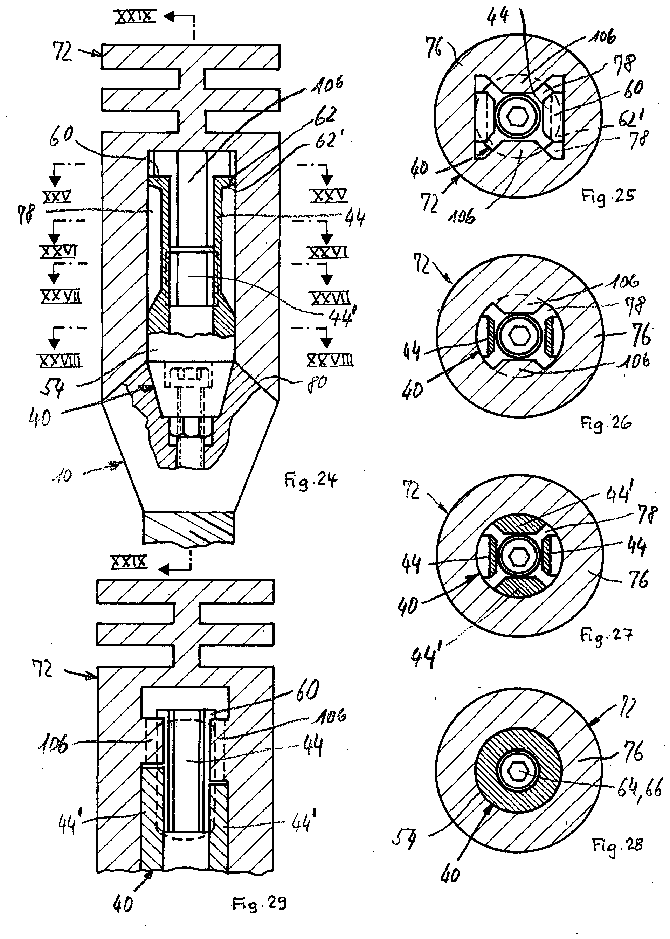

Eine weitere erfindungsgemässe Vorrichtung, bei welcher die Abformkappe 72 nur in einer einzigen Drehlage montiert werden kann, ist in den Figuren 24 bis 29 gezeigt. Das ansonsten gleich wie weiter oben beschrieben ausgebildete Sekundärteil 40 weist ähnlich der in den Figuren 20 bis 23 gezeigten Ausführungsform vier kreuzweise angeordnete Finger auf. Bei der vorliegenden Ausführungsform sind jedoch zwei einander gegenüberliegende Federfinger 44 mit Schnappnasen 60 ausgebildet. Die beiden übrigen Finger 44' weisen keine Schnappnasen auf, sind in Richtung der Längsachse 22 gemessen kürzer ausgebildet als die Federfinger 44 mit Schnappnase 60 und weisen unterschiedliche Länge auf, wie dies insbesondere der Figur 29 entnehmbar ist. Weiter sind die beiden Finger 44' ohne Schnappnasen 60 im Querschnitt massiver ausgebildet, siehe Figur 27, da sie nicht elastisch biegbar ausgebildet sein müssen. Selbstverständlich könnten diese Finger 44' denselben Querschnitt aufweisen wie die übrigen beiden Federfinger 44 mit den Schnappnasen 60.

Der Aufnahmeraum 78 der Abformkappe 72 hat von der Basisfläche 80 bis zu Längsrippen 106 einen kreiszylinderförmigen Querschnitt, wie dies insbesondere auch aus den Figuren 27 und 28 hervorgeht. Der Aufnahmeraum 78 geht in Richtung der Längsachse 22 gesehen mit demselben Querschnitt weiter, wobei nun jedoch einander gegenüberliegend zwei Längsrippen 106 in radialer Richtung gegen innen vorstehen, siehe insbesondere Figuren 26 und 29. Das der Basisfläche 80 zugewandte Ende der beiden Längsrippen 106 ist auf die Länge der beiden Finger 44' ohne Schnappnase 60 derart abgestimmt, dass die Abformkappe 72 nur in der korrekten Drehlage vollständig in Richtung gegen das Zahnimplantat 10 abgesenkt werden kann und im fertig montierten Zustand zwischen diesen Fingern 44' und den Längsrippen 106 ein Spalt frei bleibt. Zwischen den Längsrippen 106 finden die Federfinger 44 mit Schnappnase 60 Platz.

Die Stützflächen 62 und die Aufnahmeräume 78 für die Schnappnasen 60 werden durch einen Übergang vom im wesentlichen kreisrunden Querschnitt des Aufnahmeraumes 78 in einen quadratischen Querschnitt gebildet, wobei in diesem Bereich gegenüber dem quadratischen Querschnitt weiterhin die Längsrippen 106 in radialer Richtung gegen innen vorstehen, wie dies in der Figur 25 besonders gut gezeigt ist. In der vorliegenden Ausführung als auch in jener gemäss den Figuren 20 bis 23 sind die Schnappnasen 60 bei ihrer radial aussen freiliegenden Kante in vorteilhafterweise gerade ausgebildet, wie dies in den Figuren 21 und 25 deutlich dargestellt ist.

Auch bei der Ausführungsform der erfindungsgemässen Vorrichtung gemäss den Figuren 24 bis 29 ist die Montage der Abformkappe 72 am mit dem Sekundärteil 40 versehenen Zahnimplantat 10 nur in einer einzigen Drehlage möglich.

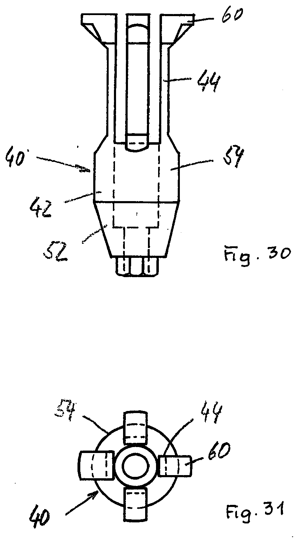

Die Figuren 30 und 31 zeigen eine weitere Ausführungsform des Sekundärteils 40 für eine erfindungsgemässe Vorrichtung. Sie ist der in den Figuren 4 bis 6 gezeigten Ausführungsform sehr ähnlich, der einzige Unterschied besteht darin, dass an Stelle von zwei nun vier kreuzweise angeordnete Federfinger 44 mit je einer Schnappnase 60 vorgesehen sind. Die dazu passende Abformkappe 72 ist gleich wie jene gemäss den Figuren 8 und 12 bis 15 ausgebildet, wobei nun für die vier Schnappnasen 60 entsprechende vier in Umfangsrichtung begrenzte Ausnehmungen 84 vorhanden sind. Wie dies aus der Figur 31 hervorgeht, ist einer der Federfinger 44 und die zugeordnete Schnappnase 60 breiter ausgebildet als die übrigen drei Federfinger 44. Dies lässt auf ähnliche Art und Weise, wie weiter oben beschrieben, das Anbringen der Anformkappe 72 am mit dem Sekundärteil 40 versehenen Zahnimplantat 10, sodass alle vier Federfinger 44 an der Abformkappe 72 einschnappen, in nur einer einzigen Drehlage zu.

Es sei jedoch ausdrücklich erwähnt, dass alle vier Federfinger 44 mit den Schnappnasen 60 identisch, und alle entsprechenden Ausnehmungen 84 gleich geformt sein können. Dies lässt die Montage der Abformkappe 72 in vier unterschiedlichen Drehrichtungen zu. Dies ist jedoch für die zahntechnische Anwendung zulässig, weil die Drehlage bereits aus der Umgebung des Gebisses, dem Abdruck der Umgebung des Gebisses und dem Mastermodell/Gipsmodell bereits hervorgeht. Entsprechendes gilt auch für die in den Figuren 1 bis 19 gezeigten Ausführungsformen.

Entsprechend ist es auch bei den in den Figuren 20 bis 29 gezeigten Ausführungsformen möglich, vier Federfinger 44 mit Schnappnase 60 gleicher Form vorzusehen und auf die Änderung des Querschnitts, bei der Ausführungsform der Figuren 20 bis 23, von quadratisch auf dreieckförmig beziehungsweise auf die Längsrippen 106 bei der Ausführungsform entsprechend den Figuren 24 bis 28 zu verzichten. Auch in diesen Fällen ist dann die Montage der Abformkappe 72 in vier unterschiedlichen Drehlagen möglich, wobei die genaue Drehlage durch den quadratischen Querschnitt und die geradlinige Kante der Schnappnasen 60 sichergestellt wird. Die Anzahl möglicher Drehlagen der Abformkappe 72 bezüglich des Sekundärteils 40 ist dann halb so gross, wie die Anzahl möglicher Drehlagen des Sekundärteils 40 bezüglich des Zahnimplantats 10.

Es sei auch erwähnt, dass bei sämtlichen Ausführungsformen das Sekundärteil 40 mit einer Auflagefläche 96 entsprechend den Figuren 10 und 11 und alle Abformkappen in diesem Fall mit einer Basisfläche 80, wie in der Figur 11 gezeigt, ausgebildet sein können.

Falls die ersten Positioniermittel 50 anstelle von, wie gezeigt achteckig, sechseckig ausgebildet sind, sind Sekundärteile 40 mit drei Federfingern empfohlen. Selbstverständlich ist dann die Abformkappe entsprechend ausgebildet.

Sämtliche gezeigten Ausführungsformen verhindern eine Verletzung der und ermöglichen eine optimale Bildung von Schleimhaut, da die Abformkappe radial nicht über das Zahnimplantat vorsteht.

Alle gezeigten Ausführungsformen weisen eine Schnappverbindung 81 auf, welche durch Überwinden einer bestimmten Zugkraft zerstörungsfrei lösbar ist, wobei immer das Sekundärteil 40 aktiv schnappt.

Die vorliegende Erfindung ist auch bei Vorrichtungen anwendbar, bei welchen die Längsachse des Zahnimplantats und die Längsachse der Abformkappe in einem Winkel zueinander verlaufen.

## Patentansprüche

1. Set umfassend eine Abformkappe (72) und eine Vorrichtung zum lösbaren Befestigen der Abformkappe (72) an einem Zahnimplantat (10), wobei
die Abformkappe (72) eine formfeste, umfangsseitig einen sacklochartigen Aufnahmeraum (78) begrenzende Wand (76) aufweist,
die Vorrichtung ein einen Sockelbereich (42) aufweisendes, mittels einer Schraubverbindung (39) direkt am Zahnimplantat (10) befestigbares Sekundärteil (40) und wenigstens einen als elastisch deformierbares Haltemittel (46) dienenden Federfinger (44) zur kraftschlüssigen Befestigung der Abformkappe (72) aufweist, und
das Sekundärteil (40) den wenigstens einen vom Sockelbereich (42) abstehenden, am Sekundärteil (40) angeformten Federfinger (44) aufweist, welcher mit der formfesten Wand (76) der Abformkappe (72) zusammenwirkt, um die kraftschlüssige Befestigung zu bilden,
**dadurch gekennzeichnet, dass**
die Abformkappe (72) eine in Umfangsrichtung begrenzte Ausnehmung (84) aufweist, mit welcher - im montierten Zustand - der Federfinger (44) zur Festlegung der gegenseitigen Drehlage in Eingriff steht.

2. Set nach Anspruch 1, **dadurch gekennzeichnet, dass** der Federfinger (44) in seinem freien Endbereich (58) eine Schnappnase (60) aufweist, welche mit einem an der formfesten Wand (76) der Abformkappe (72) angeformten Hinterschnitt (88) zusammenwirkt.

3. Set nach Anspruch 2, **dadurch gekennzeichnet, dass** der Federfinger (44) und/oder der Hinterschnitt (88) eine in einem spitzen Winkel (α) zu einer axialen Fügerichtung (F) verlaufende Stützfläche (62) zur Ausbildung einer durch Zug lösbaren Schnappverbindung (81) aufweist.

4. Set nach Anspruch 2 oder 3, **dadurch gekennzeichnet, dass** das Sekundärteil (40) wenigstens zwei Federfinger (44) mit einer Schnappnase (60) aufweist.

5. Set nach einem der Ansprüche 1 bis 4, **dadurch gekennzeichnet, dass** der Sockelbereich (42) eine bezüglich des Zahnimplantats (10) frei liegende Mantelfläche (56) aufweist, an welcher, im montierten Zustand, die formfeste Wand (76) der Abformkappe (72) anliegt.

6. Set nach einem der Ansprüche 1 bis 5, **dadurch gekennzeichnet, dass** das Zahnimplantat (10) und das Sekundärteil (40) zusammenwirkende erste Positioniermittel (50) sowie das Sekundärteil (40) und die Abformkappe (72) zusammenwirkende zweite Positioniermittel (86) zur gegenseitigen Festlegung der Drehlage aufweisen.

7. Set nach Anspruch 6, **dadurch gekennzeichnet, dass** die ersten Positioniermittel (50) einen Zapfen (48) mit einem Querschnitt eines regelmässigen Vielecks und eine Ausnehmung (34) mit gegengleichem Querschnitt aufweisen.

8. Set nach Anspruch 7, **dadurch gekennzeichnet, dass** der Querschnitt ein regelmässiges, geradzahliges Vieleck ist.

9. Set nach einem der Ansprüche 6 bis 8, **dadurch gekennzeichnet, dass** die zweiten Positioniermittel (86) eine an der Abformkappe (72) ausgebildete, in Umfangsrichtung begrenzte Ausnehmung (84) aufweisen, mit welcher das Haltemittel (46) des Sekundärteils (40) - im montierten Zustand - in Eingriff steht.

10. Set nach einem der Ansprüche 2 bis 4, **dadurch gekennzeichnet, dass** die Abformkappe (72) eine in Umfangsrichtung begrenzte Ausnehmung (84) aufweist, mit welcher - im montierten Zustand - die Schnappnase (60) des Federfingers (44) zur Festlegung der gegenseitigen Drehlage in Eingriff steht.

11. Set nach Anspruch 10, **dadurch gekennzeichnet, dass** der Hinterschnitt (88) an der Ausnehmung (84) ausgebildet ist.

12. Set nach einem der Ansprüche 1 bis 11 in Kombination mit einem Zahnimplantat (10), **dadurch gekennzeichnet, dass** das Zahnimplantat (10) einstückig ausgebildet ist und einen Verankerungsabschnitt (14), der dazu bestimmt ist, in den Kieferknochen (18) eingesetzt zu werden, sowie einen Kopfabschnitt (16), der dazu bestimmt ist, über den Kieferknochen (18) vorzustehen, aufweist, und der Kopfabschnitt (16) eine umlaufende Schulter (24), vorzugsweise in Form des Mantels eines Kegelstumpfs, aufweist, an welcher - im montierten Zustand - die Abformkappe (72) mit einer, wenigstens annähernd gegengleich geformten Basisfläche (80) anliegt.

13. Set nach einem der Ansprüche 1 bis 11, **dadurch gekennzeichnet, dass** am Sekundärteil (40) eine vorzugsweise umlaufende Auflagefläche (96) ausgebildet ist, an welcher - im montierten Zustand - die Abformkappe (72) mit einer, wenigstens annähernd gegengleich geformten Basisfläche (80) anliegt.

## Claims

1. Set comprising an impression cap (72) and a device for securing the impression cap (72) releasably on a tooth implant (10), wherein the impression cap (72) has a dimensionally stable wall (76) delimiting peripherally a receiving space (78) shaped like a blind hole, the device has a secondary part (40) having a base region (42) that can be secured directly on the tooth implant (10) by means of a screw connection (39) and at least one spring finger (44) used as an elastically deformable holding means (46) by which the impression cap (72) is secured with a force-fit connection, and the secondary part (40) has the at least one spring finger (44) protruding from the base region (42) and formed on the secondary part (40), said spring finger cooperating with the dimensionally stable wall (76) of the impression cap (72) to form the force-fit connection, **characterized in that** the impression cap (72) has a recess (84) which is limited in the circumferential direction and with which the spring finger (44) engages in the assembled state to fix the mutual position of rotation.

2. Set as claimed in claim 1, **characterized in that** the spring finger (44) has, in its free end region (58), a snap-in lug (60) that cooperates with an undercut (88) formed on the dimensionally stable wall (76) of the impression cap (72).

3. Set as claimed in claim 2, **characterized in that** the spring finger (44) and/or the undercut (88) has a support surface (62) extending at an acute angle (α) with respect to an axial joining direction (F) in order to form a snap-fit connection (81) that can be released by pulling.

4. Set as claimed in claim 2 or 3, **characterized in that** the secondary part (40) has at least two spring fingers (44) with a snap-in lug (60).

5. Set as claimed in one of claims 1 to 4, **characterized in that** the base region (42) has a jacket surface (56) which lies free in relation to the tooth implant (10) and on which the dimensionally stable wall (76) of the impression cap (72) bears in the assembled state.

6. Set as claimed in one of claims 1 to 5, **characterized in that** the tooth implant (10) and the secondary part (40) have cooperating first positioning means (50), and the secondary part (40) and the impression cap (72) have cooperating second positioning means (86) for mutually fixing the position of rotation.

7. Set as claimed in claim 6, **characterized in that** the first positioning means (50) have a stub (48) with a cross section of a regular polygon and a recess (34) of matching cross section.

8. Set as claimed in claim 7, **characterized in that** the cross section is a regular, even-sided polygon.

9. Set as claimed in one of claims 6 to 8, **characterized in that** the second positioning means (86) has a recess (84) which is limited in the circumferential direction and formed on the impression cap (72) and with which the holding means (46) of the secondary part (40) engages in the assembled state.

10. Set as claimed in one of claims 2 to 4, **characterized in that** the impression cap (72) has a recess (84) which is limited in the circumferential direction and with which the snap-in lug (60) of the spring finger (44) engages in the assembled state in order to fix the mutual position of rotation.

11. Set as claimed in claim 10, **characterized in that** the undercut (88) is formed on the recess (84).

12. Set as claimed in one of claims 1 to 11 in combination with a tooth implant (10), **characterized in that** the tooth implant (10) is designed in one piece and has an anchoring portion (14), which is intended to be inserted in the jaw bone (18), and a head portion (16), which is intended to protrude above the jaw bone (18), and the head portion (16) has a peripheral shoulder (24), preferably in the shape of the jacket of a truncated cone, on which the impression cap (72), in the assembled state, bears via a base surface (80) of at least approximately a matching shape.

13. Set as claimed in one of claims 1 to 11, **characterized in that** a preferably peripheral support surface (96) is formed on the secondary part (40), on which support surface (96) the impression cap (72) bears, in the assembled state, via a base surface (80) of at least approximately a matching shape.

## Revendications

1. Set comprenant une coiffe d'empreinte (72) et un dispositif pour fixer la coiffe d'empreinte (72) de façon détachable à un implant dentaire (10), la coiffe d'empreinte (72) présentant une paroi indéformable (76) délimitant à la périphérie un espace de réception (78) en forme de trou borgne, le dispositif présentant une partie secondaire (40) présentant une zone de socle (42) qui peut être fixée directement à l'implant dentaire (10) au moyen d'un raccord vissé (39) et au moins un doigt à ressort (44) servant comme moyen de maintien (46) élastiquement déformable pour la fixation par liaison de force de la coiffe d'empreinte (72), et la partie secondaire (40) présentant la au moins un doigt à ressort (44) se dressant sur la zone de socle (42) et formé sur la partie secondaire (40), lequel doigt à ressort interagit avec la paroi indéformable (76) de la coiffe d'empreinte (72) pour former la liaison de force, **caractérisé en ce que** la coiffe d'empreinte (72) présente une creux (84) qui est limité dans la direction circonférentielle et avec lequel le doigt à ressort (44) interagit dans l'état assemblé pour fixer l'état mutuel de rotation.

2. Set selon la revendication 1, **caractérisé en ce que** le doigt à ressort (44) présente dans sa zone d'extrémité libre (58) un ergot enclipsable (60) qui interagit avec une contre-dépouille (88) formée sur la paroi indéformable (76) de la coiffe d'empreinte (72).

3. Set selon la revendication 2, **caractérisé en ce que** le doigt à ressort (44) et/ou la contre-dépouille (88) présente une surface de support (62) s'étendant avec un angle aigu (α) par rapport à une direction d'assemblage axiale (F) pour former une connexion par encliquetage (81) qui est détachable par traction.

4. Set selon la revendication 2 ou 3, **caractérisé en ce que** la partie secondaire (40) présente au moins deux doigts à ressort (44) avec un ergot enclipsable (60).

5. Set selon l'une des revendications 1 à 4, **caractérisé en ce que** la zone de socle (42) présente une surface d'enveloppe (56) qui est libre par rapport à l'implant dentaire (10) et sur laquelle la paroi indéformable (76) de la coiffe d'empreinte (72) est en appui dans l'état assemblé.

6. Set selon l'une des revendications 1 à 5, **caractérisé en ce que** l'implant dentaire (10) et la partie secondaire (40) présentent des premiers moyens de positionnement (50) interagissants, et la partie secondaire (40) et la coiffe d'empreinte (72) présentent des seconds moyens de positionnement (86) interagissants pour fixer mutuellement la position de rotation.

7. Set selon la revendication 6, **caractérisé en ce que** les premiers moyens de positionnement (50) présentent un tenon (48) avec une section transversale d'un polygone régulier et un creux (34) de section transversale correspondante.

8. Set selon la revendication 7, **caractérisé en ce que** la section transversale est un polygone régulier à nombre pair de côtés.

9. Set selon l'une des revendications 6 à 8, **caractérisé en ce que** les seconds moyens de positionnement (86) présentent un creux (84) qui est limité dans la direction circonférentielle et formé sur la coiffe d'empreinte (72) et avec lequel le moyen de maintien (46) de la partie secondaire (40) est engagé dans l'état assemblé.

10. Set selon l'une des revendications 2 à 4, **caractérisé en ce que** la coiffe d'empreinte (72) présente un creux (84) qui est limité dans la direction circonférentielle et avec lequel l'ergot enclipsable (60) du doigt doigt à ressort (44) est engagé dans l'état assemblé pour fixer l'état mutuel de rotation.

11. Set selon la revendication 10, **caractérisé en ce que** la contre-dépouille (88) est formé sur le creux (84).

12. Set selon l'une des revendications 1 à 11 en combinaison avec un implant dentaire (10), **caractérisé en ce que** l'implant dentaire (10) est conçu en une seule pièce et présente une partie d'ancrage (14) qui est conçue pour être insérée dans l'os de la mâchoire (18), et une partie de tête (16) qui est conçue pour dépasser au-dessus de l'os de la mâchoire (18), et la partie de tête (16) présente un épaulement périphérique (24), préférablement en forme d'enveloppe d'un cône tronqué, sur lequel la coiffe d'empreinte (72), dans l'état assemblé, est en appui avec une surface de base (80) de forme au moins approximativement correspondante.

13. Set selon l'une des revendications 1 à 11, **caractérisé en ce qu'**une surface de support (96) préférablement périphérique est conçue sur la partie secondaire (40), sur laquelle surface de support la coiffe d'empreinte (72), dans l'état assemblé, est en appui avec une surface de base (80) de forme au moins approximativement correspondante.
